(19) Europäisches Patentamt / European Patent Office / Office européen des brevets

(11) **EP 4 175 823 B1**

(12) **EUROPÄISCHE PATENTSCHRIFT**

(45) Veröffentlichungstag und Bekanntmachung des Hinweises auf die Patenterteilung:
**12.11.2025 Patentblatt 2025/46**

(21) Anmeldenummer: **21736970.1**

(22) Anmeldetag: **09.06.2021**

(51) Internationale Patentklassifikation (IPC):
**B29D 30/52** (2006.01)   **B29C 48/12** (2019.01)
**B29C 48/21** (2019.01)   **B29C 48/30** (2019.01)
**B29C 48/49** (2019.01)   **B60C 11/03** (2006.01)
**B60C 11/00** (2006.01)

(52) Gemeinsame Patentklassifikation (CPC):
**B29D 30/52; B29C 48/0022; B29C 48/12;
B29C 48/21; B29C 48/304; B29C 48/49;**
B60C 11/005; B60C 2011/0033

(86) Internationale Anmeldenummer:
**PCT/DE2021/200080**

(87) Internationale Veröffentlichungsnummer:
**WO 2022/002320 (06.01.2022 Gazette 2022/01)**

(54) **VORRICHTUNG ZUM EXTRUDIEREN EINES UNVULKANISIERTEN, LÄNGSRILLEN AUFWEISENDEN KAUTSCHUKENDLOSSTREIFEN ZUR HERSTELLUNG EINES FAHRZEUGREIFENBAUTEILS, VERWENDUNG DER VORRICHTUNG ZUM HERSTELLEN EINES FAHRZEUGLUFTREIFENS, VERFAHREN ZUM HERSTELLEN EINES FAHRZEUGLUFTREIFENS SOWIE EINEN FAHRZEUGLUFTREIFEN**

EQUIPMENT FOR EXTRUDING AN ENDLESS UNVULCANIZED RUBBER STRIP HAVING LONGITUDINAL GROOVES FOR PRODUCING A VEHICLE TYRE COMPONENT, USE OF THE EQUIPMENT FOR PRODUCING A PNEUMATIC VEHICLE TYRE, METHOD FOR PRODUCING A PNEUMATIC VEHICLE TYRE AND A PNEUMATIC VEHICLE TYRE

ÉQUIPEMENT D'EXTRUSION D'UNE BANDE SANS FIN DE CAOUTCHOUC NON VULCANISÉ PRÉSENTANT DES RAINURES LONGITUDINALES POUR LA FABRICATION D'UN ÉLÉMENT DE PNEUMATIQUE DE VÉHICULE, UTILISATION DE L'ÉQUIPEMENT POUR LA FABRICATION D'UN PNEUMATIQUE DE VÉHICULE, PROCÉDÉ DE FABRICATION D'UN PNEUMATIQUE DE VÉHICULE ET PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2020 DE 102020208337**

(43) Veröffentlichungstag der Anmeldung:
**10.05.2023 Patentblatt 2023/19**

(73) Patentinhaber: **Continental Reifen Deutschland GmbH**
**30175 Hannover (DE)**

(72) Erfinder:
• **VÖLKER, Thomas**
**30165 Hannover (DE)**
• **PANACEK, Anton**
**30165 Hannover (DE)**
• **ROVNY, Roman**
**30165 Hannover (DE)**

(74) Vertreter: **Continental Corporation**
**c/o Continental Reifen Deutschland GmbH**
**Intellectual Property Tires**
**Continental-Plaza 1**
**30175 Hannover (DE)**

(56) Entgegenhaltungen:
EP-A1- 0 925 903    EP-A2- 1 097 825
EP-A2- 2 174 770    DE-A1- 102015 108 707
DE-A1- 3 502 020    JP-A- 2005 014 403
US-A- 2 560 022    US-A- 3 814 160
US-A- 4 773 459    US-A1- 2012 012 236

**Beschreibung**

Die Erfindung betrifft eine Vorrichtung zum Extrudieren eines unvulkanisierten, Längsrillen aufweisenden Kautschukendlosstreifen zur Herstellung eines Fahrzeugreifenbauteils. Die Erfindung betrifft auch eine Verwendung der Vorrichtung zum Herstellen eines Fahrzeugluftreifens und ein Verfahren zum Herstellen eines Fahrzeugluftreifens sowie einen Fahrzeugluftreifen umfassend eine innere Außenwand sowie einen einteiligen oder zweiteiligen Laufstreifen.

Bei der industriellen Herstellung von Fahrzeugreifen müssen verschiedene Materialien wie Kautschukmischungen oder Verstärkungsmaterialien zu verschiedenen Rohreifenbauteilen verarbeitet werden, welche in einem letzten Produktionsschritte zusammen in einer Vulkanisationsform zu einem Reifen vulkanisiert werden. Eine mögliche Art der Herstellung der verschiedenen Rohreifenbauteilen aus Kautschukmischungen ist das Extrudieren und Ausformen zu Endlosstreifen, welche in einem späteren Prozessschritt entsprechend der Größe des entstehenden Rohreifenbauteils zugeschnitten werden. Nach dem Zuschneiden werden in der Regel sämtliche nötigen Rohreifenbauteile auf eine Reifenaufbautrommel gelegt, um auf der Reifenaufbautrommel zu einem unvulkanisierten Reifenrohling verarbeitet zu werden. Der Reifenrohling wird anschließend in einer Vulkanisationsform mit entsprechend profilierten Innenwänden zu einem Reifen mit einem profilierten Laufstreifen vulkanisiert. Ein Problem bei dieser Art der Herstellung von Reifen mit profilierten Laufstreifen ist, dass zu Verschiebungen zwischen den verschiedenen Lagen des vulkanisierten Reifenrohlings in der Vulkanisationsform kommt.

Dieses Problem spricht beispielsweise EP 3118023 B1 an, welches einen "Fahrzeugluftreifen, welcher in einer Vulkanisationsform mit einem Segmentring und zwei Seitenwandschalen vulkanisiert worden ist, deren Formgrenzen an oder in den Schulterbereichen sichtbare Grenzstellen (11) hinterlassen, und welcher einen Laufstreifen (1), Seitenwandprofile (6), einen mehrlagigen Gürtelverband (7), eine Radialkarkasse (8), welche Wulstkerne (3) in Wulstbereichen (2) von axial innen nach axial außen umläuft, und ferner je ein Hornprofil (5) in jedem Wulstbereich (2) aufweist, welches außenseitig von einem radial inneren, Richtung Wulstkern (3) verjüngend auslaufenden Endabschnitt (6b) des Seitenwandprofils (6) überlappt ist, wobei in jedem Schulterbereich ein Wingprofil (10) verläuft, welches einen radial äußeren, Richtung Laufstreifen (1) verjüngend auslaufenden Endabschnitt (6a) des Seitenwandprofils (6) von außen überlappt, dadurch gekennzeichnet, dass sich die Wingprofile (10) radial außerhalb der von den Formgrenzen zwischen dem Segmentring und den Seitenwandschalen hinterlassenen Grenzstellen (11) befinden" betrifft (s. Anspruch 1).

Die DE 35 02 020 A1 betrifft einen Spritzkopf zum Profilieren extrudierbarer plastischer Werkstoffe. Die DE 10 2015 108707 A1 betrifft eine Reifenstreifen-Extrusionsvorrichtung zum Herstellen von Lauf- und/oder Seitenstreifen für Reifen sowie ein entsprechendes Verfahren. Die JP 2005 014403 A betrifft eine Vorrichtung zum Ausformen von Laufstreifengummimischungen für Reifen. Die EP 0 925 903 A1 betrifft Verfahren zur Herstellung von unvulkanisierten Laufstreifen für Reifen, Vorrichtungen sowie entsprechende Luftreifen. Die EP 2 174 770 A2 betrifft eine Spleißstange für eine Reifenprofilextrusionsvorrichtung.

Die US 2012/012236 A1 betrifft einen Fahrzeugluftreifen mit einem Laufstreifen, der eine Cap/Base Konstruktion aufweist, sowie Verfahren zu dessen Herstellung. Die US 3 814 160 A betrifft einen Reifen mit einem Reifenabriebsindikator.

Weiterer Stand der Technik ist in der US 2 560 022 A, in der US 4 773 459 A und in der EP 1 097 825 A2 zu finden.

Es war daher die Aufgabe der vorliegenden Erfindung, eine Vorrichtung oder ein Verfahren bereitzustellen, welches eine bessere Formstabilität und Positionsstabilität der verschiedenen Lagen in einem vulkanisierten Reifen in einem Fahrzeugreifen erzeugt.

Gelöst wird diese Aufgabe erfindungsgemäß durch eine Vorrichtung zum Extrudieren eines unvulkanisierten, Längsrillen aufweisenden Kautschukendlosstreifen zur Herstellung eines Fahrzeugreifenbauteils, umfassend oder bestehend aus

- eine Ausformeinheit zum Ausformen eines unvulkanisierten Kautschukendlosstreifens mit mindestens einer Strömungseintrittsöffnung und mit mindestens einer Strömungsaustrittsöffnung, wobei sich ein Strömungskanal zum Leiten einer unvulkanisierten Kautschukmischung von der einen Strömungseintrittsöffnung zu der einen Strömungsaustrittsöffnung durch die Ausformeinheit erstreckt,
- Komponentenanordnungseinheit zum Zuführen von einer oder mehrerer unvulkanisierten Kautschukkomponenten in die Ausformeinheit, wobei die Komponentenanordnungseinheit einen oder mehrere Strömungskanäle aufweist,
- mindestens eine Schneideeinheit, die dazu eingerichtet ist, Längsrillen in einen durch die Ausformeinheit ausgeformten unvulkanisierten Kautschukendlosstreifen zu schneiden, wobei ein zur Strömungsleitrichtung des Strömungskanal senkrecht Querschnitt der Schneideeinheit eine U-Form, eine rechteckige Form oder eine Trapezform aufweist und die Schneideeinheit eine Höhe und eine maximale Breite aufweist,

dadurch gekennzeichnet, dass die Schneideeinheit einteilig ausgebildet ist, wobei die mindestens eine Schneideeinheit mit U-förmigen Querschnitt zwei Beine aufweist und zusätzlich eine Mittelplanke mit oder ohne Schneide aufweist, wobei die Mittelplanke sich von einem Bein der Schneideeinheit zum anderen Bein der Schneideeinheit erstreckt.

Es ist eine große Leistung der vorliegenden Erfindung, herausgefunden zu haben, dass durch das präzise Schneiden von Längsrillen mittels einer einteiligen Schneideeinheit die Formstabilität dieser Längsrillen noch weiter erhöht werden kann. Mehrteilige Schneideeinheiten aus dem Stand der Technik haben sich hierbei als ungeeignet herausgestellt, da die verschiedenen Teile der Schneideeinheit unterschiedliche Drücke von der extrudierten Kautschukmischung innerhalb der Ausformeinheit erfahren und somit auch die Form der entstehenden Längsrillen entsprechend variiert. Überraschenderweise hat sich die Variation in der Form der entstehenden Längsrillen dadurch verbessern lassen, dass die Schneideeinheit einteilig ausgebildet ist. Noch überraschender hat sich hierdurch auch die Formstabilität der Trennflächen in einem final resultierenden Fahrzeugluftreifen mit einen mittels einer erfindungsgemäßen Vorrichtung hergestellten Laufstreifen verbessern, wobei sich bei diesen Trennflächen in dem final resultierenden Fahrzeugluftreifen um die aneinander liegenden Flächen

A) zwischen einer Cap- und einer Base-Mischung des Laufstreifens,
B) zwischen dem vulkanisierten Laufstreifen und dem vulkanisierten Gürtelpaket,
C) zwischen den einzelnen Gürtellagen des vulkanisierten Gürtelpakets,
D) zwischen der vulkanisierten Karkasslage und dem vulkanisierten Gürtelpaket oder
E) zwischen der vulkanisierten Karkasslage und dem Innerliner

handelt. Dass sich die Gleichmäßigkeit dieser Trennflächen im finalen im Final resultierenden Reifen aufgrund der erhöhten Formstabilität der Längsrillen im Extrudat zur Herstellung des Laufstreifens des final resultierenden Reifens verbessern, ist ein überraschender Effekt.

Im Rahmen der vorliegenden Erfindung umfasst der Ausdruck "Komponentenanordnungseinheit" insbesondere eine sogenannte Vorleiste einer Extruderanlage, im Englischen auch "Pre-Die" genannt.

Im Rahmen der vorliegenden Erfindung umfasst der Ausdruck "Ausformeinheit" insbesondere eine sogenannte Endleiste einer Extruderanlage, im Englischen auch "Final-Die" genannt.

Im Rahmen der vorliegenden Erfindung ist die Strömungsleitrichtung des Strömungskanal die Richtung, in der die Kautschukmischung beim Austritt aus der Strömungsaustrittsöffnung der Ausformeinheit fließt, also senkrecht zur Austrittsfläche der Strömungsaustrittsöffnung der Ausformeinheit. Die Längserstreckung der Längsrillen erstreckt sich somit parallel zur Strömungsleitrichtung.

Bevorzugt ist eine erfindungsgemäße Vorrichtung wie vorstehend beschrieben oder wie vorstehend als bevorzugt beschrieben, wobei das Verhältnis zwischen der Höhe der Schneideeinheit zu der maximalen Breite der Schneideeinheit im Bereich von 20:1 bis 1:3, 10:1 bis 1:2 liegt, bevorzugt im Bereich von 6:1 bis 1:1, besonders bevorzugt im Bereich von 2:1 bis 1,5:1.

Ein Vorteil des vorstehend beschriebenen Aspekts der vorliegenden Erfindung ist, dass insbesondere bei Schneideeinheiten mit den vorstehenden beschriebenen Höhe-Breite-Verhältnissen eine besonders große Formstabilität der Längsrissen und somit eine bessere Stabilität bei den besagten Trennflächen im finalen Fahrzeugluftreifen erreicht werden konnte.

Bevorzugt ist eine erfindungsgemäße Vorrichtung wie vorstehend beschrieben oder wie vorstehend als bevorzugt beschrieben, wobei

- die Höhe der Schneideeinheit im Bereich von 10 % bis 99 % der Höhe der Strömungsaustrittsöffnung liegt und/oder
- die Breite der Schneideeinheit im Bereich von 0,1 mm bis 15 mm liegt.

Ein Vorteil des vorstehend beschriebenen Aspekts der vorliegenden Erfindung ist, dass insbesondere bei Schneideeinheiten mit den vorstehenden beschriebenen Höhen und Breiten eine besonders große Formstabilität der Längsrissen und somit eine bessere Stabilität bei den besagten Trennflächen im finalen Fahrzeugluftreifen erreicht werden konnte.

Erfindungsgemäß ist eine erfindungsgemäße Vorrichtung, wobei die mindestens eine Schneideeinheit mit U-förmigen Querschnitt zwei Beine, die bevorzugt jeweils an einem Ende beispielsweise mit ein und demselben Verbindungsstück miteinander stoffschlüssig verbunden sind und das jeweils andere Ende eines Beines der Schneideeinheit an der einen Strömungswand oder an dem Rahmen der Ausformeinheit, aufweist und zusätzlich eine Mittelplanke mit oder ohne Schneide aufweist, wobei die Mittelplanke sich von einem Bein der Schneideeinheit zum anderen Bein der Schneideeinheit erstreckt, wobei das eine Ende der Mittelplanke bevorzugt an einem Bein der Schneideeinheit und das andere Ende der Mittelplanke an dem anderen Bein der Schneideeinheit angeordnet ist oder höhenverstellbar angebracht ist. Das eine und das andere Bein der Schneideeinheit

Ein Vorteil des vorstehend beschriebenen Aspekts der vorliegenden Erfindung ist, dass die Mittelplanke die Cap- und die Base-Mischung voneinander trennen kann und diese sofort rezykliert und wiederverwendet werden können.

Bevorzugt ist eine erfindungsgemäße Vorrichtung wie vorstehend beschrieben oder wie vorstehend als bevorzugt beschrieben, wobei das jeweilige besagte andere Ende der zwei Beine einer jeden Schneideeinheit mit U-förmigen Querschnitt an einer Strömungswand des eine Strömungskanals oder an einem in Strömungsleitrichtung des Strömungskanal gesehen hinter der Strömungsaustrittsöffnung der Ausformeinheit angeordneten Rahmen angebracht ist, wobei das jeweilige besagte andere Ende der zwei Beine einer jeden Schneideeinheit mit U-förmigen Querschnitt bevorzugt an der einen Strömungswand oder and dem Rahmen angeschraubt ist, wobei die Strömungswand und/oder der Rahmen besonders bevorzugt verschiedene Verschraubungsstellen zum Anschrauben der zwei Beine einer jeden Schneideeinheit aufweisen.

Ein Vorteil des vorstehend beschriebenen Aspekts der vorliegenden Erfindung ist, dass die Schneideeinheiten zur Wartung oder zur Herstellung von Extrudaten ohne Längsrillen abgenommen werden können.

Besonders bevorzugt ist eine erfindungsgemäße Vorrichtung wie vorstehend beschrieben oder wie vorstehend als bevorzugt beschrieben, wobei das jeweilige besagte andere Ende der zwei Beine einer jeden Schneideeinheit mit U-förmigen Querschnitt an einer Strömungswand des eine Strömungskanals oder an einem in Strömungsleitrichtung des Strömungskanal gesehen hinter der Strömungsaustrittsöffnung der Ausformeinheit angeordneten Rahmen angebracht ist, wobei das jeweilige besagte andere Ende der zwei Beine einer jeden Schneideeinheit mit U-förmigen Querschnitt bevorzugt in einer sich senkrecht zur Strömungsleitrichtung erstreckenden Verschraubungsleiste in der einen Strömungswand oder in dem Rahmen beispielsweise mittels einer T-Nut angeschraubt ist

Ein Vorteil des vorstehend beschriebenen Aspekts der vorliegenden Erfindung ist, dass die Schneideeinheiten und somit die Längsrillen an verschiedenen Stellen angeordnet werden können.

Bevorzugt ist eine erfindungsgemäße Vorrichtung wie vorstehend beschrieben oder wie vorstehend als bevorzugt beschrieben, wobei die Schneideeinheit in Strömungsleitrichtung des Strömungskanal gesehen hinter der Strömungsaustrittsöffnung der Ausformeinheit angeordnet und angebracht ist und bevorzugt höchstens einen Abstand zur Strömungsaustrittsöffnung von 100 mm, bevorzugt 1 mm, aufweist.

Ein Vorteil des vorstehend beschriebenen Aspekts der vorliegenden Erfindung ist, dass bei diesem Höchstabstand nach dem Ausformen die optimale Temperatur der Kautschukmischung, wie beispielsweise nachstehend für ein erfindungsgemäßes Verfahren beschrieben, erreicht ist.

Bevorzugt ist eine erfindungsgemäße Vorrichtung wie vorstehend beschrieben oder wie vorstehend als bevorzugt beschrieben, wobei die Vorrichtung einen Extruder mit einer Extruderschnecke pro Strömungskanal der Komponentenanordnungseinheit aufweist und die jeweilige Extruderschnecke dazu eingerichtet ist, eine unvulkanisierte Kautschukkomponente in den jeweiligen Strömungskanal der Komponentenanordnungseinheit zu drücken.

Bevorzugt ist eine erfindungsgemäße Vorrichtung wie vorstehend beschrieben oder wie vorstehend als bevorzugt beschrieben, wobei die Vorrichtung zusätzlich eine Querschneideeinheit umfasst, wobei die Querschneideeinheit dazu vorgesehen ist, einen oder sämtliche von aus einer Kautschukmischung bestehenden und mittels der Vorrichtung hergestellten Streifen in unvulkanisierten Fahrzeugreifenbauteilen zu schneiden. Hierbei muss der Streifen in eine solche Länge geschnitten werden, dass er anschließend entsprechend mit anderen Reifenbauteilen um eine Reifenaufbautrommel gelegt werden kann, um an der Aufbautrommel zu einem Reifenrohling verarbeitet zu werden. Der Reifenrohling wird anschließend in einer Vulkanisationsform zu einem Fahrzeugluftreifen vulkanisiert. Die Vulkanisationsform hat hierbei Lamellen für die Umfangs- und Seitenrillen des resultierenden Fahrzeugluftreifens. Die Längsrillen des mittels der erfindungsgemäßen Vorrichtung hergestellten Laufstreifens sollten dabei im besten Falle so auf dem Reifenrohling mittels der Aufbautrommel montiert werden, dass die in der Vulkanisationsform vorhandenen Lamellen für die Umfangsrillen in den besagten Längsrillen beim Vulkanisieren liegen. Auf diese Weise werden die gleichmäßigsten Trennflächen zwischen Laufstreifen, Gürtellagen, Karkasslage und Innerliner wie nachstehend beschrieben erreicht.

In besonders hohem Maße bevorzugt ist eine erfindungsgemäße Vorrichtung wie vorstehend beschrieben, bestehend aus:

- eine Ausformeinheit zum Ausformen eines unvulkanisierten Kautschukendlosstreifens mit mindestens einer Strömungseintrittsöffnung und mit mindestens einer Strömungsaustrittsöffnung, wobei sich ein Strömungskanal zum Leiten einer unvulkanisierten Kautschukmischung von der einen Strömungseintrittsöffnung zu der einen Strömungsaustrittsöffnung durch die Ausformeinheit erstreckt,
- Komponentenanordnungseinheit zum Zuführen von einer oder mehrerer unvulkanisierten Kautschukkomponenten in die Ausformeinheit, wobei die Komponentenanordnungseinheit einen oder mehrere Strömungskanäle aufweist,
- mindestens eine Schneideeinheit, die dazu eingerichtet ist, Längsrillen in einen durch die Ausformeinheit ausgeformten unvulkanisierten Kautschukendlosstreifen zu schneiden, wobei ein Querschnitt der Schneideeinheit eine U-Form aufweist und die Schneideeinheit eine Höhe und eine maximale Breite aufweist,

wobei

- die Schneideeinheit einteilig ausgebildet ist,
- das Verhältnis zwischen der Höhe der Schneideeinheit zu der Breite der Schneideeinheit im Bereich von 10: 1 bis 1:2 liegt,

- die Höhe der Schneideeinheit im Bereich von 10 % bis 99 % der Höhe der Strömungsaustrittsöffnung liegt und die Breite der Schneideeinheit im Bereich von 0,1 mm bis 15 mm liegt,
- das jeweilige freie Ende der zwei Beine einer jeden Schneideeinheit mit U-förmigen Querschnitt an einer Strömungswand des eine Strömungskanals oder an einem in Strömungsleitrichtung des Strömungskanal gesehen hinter der Strömungsaustrittsöffnung der Ausformeinheit angeordneten Rahmen angebracht ist, wobei das jeweilige freie Ende der zwei Beine einer jeden Schneideeinheit mit U-förmigen Querschnitt bevorzugt an der einen Strömungswand oder and dem Rahmen angeschraubt ist,
- die Vorrichtung pro Strömungskanäle in der Komponentenanordnungseinheit einen Extruder mit einer Extruderschnecke aufweist und die Extruderschnecke dazu eingerichtet ist, eine unvulkanisierte Kautschukkomponente in den jeweiligen Strömungskanal der Komponentenanordnungseinheit zu drücken, und
- die Vorrichtung zusätzlich eine Querschneideeinheit umfasst, wobei die Querschneideeinheit dazu vorgesehen ist, einen oder sämtliche von aus einer Kautschukmischung bestehenden und mittels der Vorrichtung hergestellten Streifen in unvulkanisierten Fahrzeugreifenbauteilen zu schneiden.

Die vorstehend beschriebenen vorteilhaften Aspekte einer erfindungsgemäßen Vorrichtung zum Extrudieren eines unvulkanisierten, Längsrillen aufweisenden Kautschukendlosstreifen zur Herstellung eines Fahrzeugreifenbauteils gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte einer erfindungsgemäßen Vorrichtung zum Extrudieren eines unvulkanisierten, Längsrillen aufweisenden Kautschukendlosstreifen zur Herstellung eines Fahrzeugreifenbauteils.

Die Erfindung betrifft auch ein Verfahren zum Herstellen eines Fahrzeugluftreifens, umfassend die folgenden Schritte:

A) Extrudieren und/oder Walzen mindestens einer unvulkanisierten Kautschukmischung,
B) Ausformen und Schneiden der einen extrudierten und/oder gewalzenen unvulkanisierten Kautschukmischung zu einen unvulkanisierten Kautschukendlosstreifen und Ausschneiden von Längsrillen in den unvulkanisierten Kautschukendlosstreifen mittels einer Vorrichtung nach einem der Ansprüche 1 bis 5, sodass ein unvulkanisierter Kautschukendlosstreifen mit Längsrillen, wobei die extrudierte und/oder gewalzene unvulkanisierte Kautschukmischung während des Schneidens bevorzugt eine Temperatur im Bereich von 90 °C bis 150 °C hat, besonders bevorzugt eine Temperatur im Bereich von 90 °C bis 120 °C, ganz besonders bevorzugt eine Temperatur im Bereich von 90 °C bis 100 °C,
C) Optionales Ausformen von weiterer Kautschukmischung der mindestens einen unvulkanisierten Kautschukmischung zu weiteren Kautschukendlosstreifen,
D) Zuschneiden des unvulkanisierten Kautschukendlosstreifens mit Längsrillen zu einem unvulkanisierten Laufstreifenbauteil zur Herstellung eines Laufstreifens eines Fahrzeugluftreifens und optionales Zuschneiden der weiteren Kautschukendlosstreifen zu weiteren unvulkanisierten Bauteilen zur Herstellung eines Fahrzeugluftreifens,
E) Verarbeiten

- des in Schritt D) resultierenden unvulkanisierten Laufstreifenbauteils und optional
- weiterer und/oder der weiteren unvulkanisierten Bauteile zur Herstellung eines Fahrzeugluftreifens

zu einem unvulkanisierten Reifenrohling zur Herstellung eines Fahrzeugluftreifens, wobei das Laufstreifenbauteil bevorzugt aus den Längsrillen des unvulkanisierten Kautschukendlosstreifens resultierende Umfangsrillen umfasst,
F) Vulkanisieren des in Schritt E) angefertigten Reifenrohlings, sodass ein Fahrzeugluftreifen mit einem Laufstreifen mit Umfangsrillen entsteht.

Ein Vorteil des vorstehend beschriebenen Aspekts der vorliegenden Erfindung ist, dass Kautschukmischung mit einer Temperatur von mindestens 90 °C sich besonders gut schneiden lassen und gleichzeitig eine hohe Formstabilität in den entstehenden Längsrillen auftritt.
Das erfindungsgemäße Verfahren ist nachstehend noch etwas genauer beschrieben:
In Schritt D) muss der Kautschukendlosstreifen in eine solche Länge geschnitten werden, dass er anschließend in Schritt E) entsprechend mit anderen Reifenbauteilen um eine Reifenaufbautrommel gelegt werden kann, um an der Aufbautrommel final in Schritt E) zu einem Reifenrohling verarbeitet zu werden. Der Reifenrohling wird anschließend in Schritt F) in einer Vulkanisationsform zu einem Fahrzeugluftreifen vulkanisiert. Die Vulkanisationsform in Schritt F) hat hierbei Lamellen für die Umfangs- und Seitenrillen des resultierenden Fahrzeugluftreifens. Die Längsrillen des mittels der erfindungsgemäßen Vorrichtung hergestellten Laufstreifens sollten dabei in Schritt E) im besten Falle so auf dem Reifenrohling mittels der Aufbautrommel montiert werden, dass die in der Vulkanisationsform vorhandenen Lamellen für die Umfangsrillen in den besagten Längsrillen beim Vulkanisieren in Schritt F) liegen. Auf diese Weise werden die gleichmäßigsten Trennflächen zwischen Laufstreifen, Gürtellagen, Karkasslage und Innerliner wie nachstehend beschrieben erreicht.

Bevorzugt ist ein erfindungsgemäßes Verfahren wie vorstehend beschrieben oder wie vorstehend als bevorzugt beschrieben, wobei der in Schritt B) entstehende unvulkanisierte Kautschukendlosstreifen mit Längsrillen eine Base-Mischung und eine Cap-Mischung umfasst, wobei die Base-Mischung und die Cap-Mischung planparallel übereinander angeordnet sind und die Schneideeinheit beim Ausschneiden in Schritt B) einen Teil der Cap-Mischung und einen Teil der Base-Mischung aus dem Kautschukendlosstreifen herausschneidet, wobei bevorzugt die Mittelflanke der Schneideeinheit den Teil der Cap-Mischung von dem Teil der Base-Mischung trennt.

Ein Vorteil des vorstehend beschriebenen Aspekts der vorliegenden Erfindung ist, dass die Mittelplanke die Cap- und die Base-Mischung voneinander trennen kann und diese sofort rezykliert und wiederverwendet werden können.

Die vorstehend beschriebenen vorteilhaften Aspekte einer erfindungsgemäßen Vorrichtung zum Extrudieren eines unvulkanisierten, Längsrillen aufweisenden Kautschukendlosstreifens zur Herstellung eines Fahrzeugreifenbauteils und eines erfindungsgemäßen Verfahrens zum Herstellen eines Fahrzeugluftreifens gelten auch für sämtliche Aspekte einer nachstehend beschriebenen Verwendung und eines nachstehend beschriebenen Fahrzeugluftreifen und die nachstehend diskutierten vorteilhaften Aspekte erfindungsgemäßer Verwendungen oder erfindungsgemäßer Fahrzeugluftreifen gelten entsprechend für sämtliche Aspekte einer erfindungsgemäßen Vorrichtung zum Extrudieren eines unvulkanisierten, Längsrillen aufweisenden Kautschukendlosstreifens zur Herstellung eines Fahrzeugreifenbauteils und eines erfindungsgemäßen Verfahrens zum Herstellen eines Fahrzeugluftreifens.

Die Erfindung betrifft auch eine Verwendung einer Vorrichtung nach einem der vorangehenden Ansprüche

- zum Herstellen eines Fahrzeugluftreifens, insbesondere eines Fahrzeugluftreifens wie nachstehend beschrieben, und/oder
- zum Extrudieren eines unvulkanisierten Kautschukendlosstreifen zur Herstellung eines Fahrzeugreifenbauteils mit Längsrillen, wobei die Vorrichtung bevorzugt dazu verwendet wird, Längsrillen in einen unvulkanisierten Kautschukendlosstreifen zur Herstellung eines Laufstreifens eines Fahrzeugluftreifens zu schneiden, wobei der Kautschukendlosstreifen besonders bevorzugt mindestens zwei Kautschukmischungen umfasst, wobei die eine der mindestens zwei Kautschukmischungen eine Cap-Mischung ist und die zweite der mindestens zwei Kautschukmischungen eine Base-Mischung ist, wobei ganz besonders bevorzugt die Cap- und die Base-Mischung in dem Kautschukendlosstreifen planparallel übereinander angeordnet sind und die Schneideeinheit einen Teil der Cap-Mischung und einen Teil der Base-Mischung aus dem Kautschukendlosstreifen herausschneidet, wobei insbesondere ganz besonders bevorzugt die Mittelflanke der Schneideeinheit den Teil der Cap-Mischung von dem Teil der Base-Mischung trennt.

Im Rahmen d er vorliegenden Erfindung sind mit Cap- und Base-Mischung insbesondere Cap-Kautschukmischungen und Base-Kautschukmischungen gemeint.

Die Erfindung betrifft auch einen Fahrzeugluftreifen umfassend eine innere Außenwand sowie einen einteiligen oder zweiteiligen Laufstreifen, wobei der Laufstreifen nach einem vorstehend beschriebenen oder vorstehend als bevorzugt beschriebenen Verfahren herstellbar oder hergestellt ist wobei der Laufstreifen nach einem vorstehend beschriebenen oder vorstehend als bevorzugt beschriebenen Verfahren oder gemäß der vorstehend beschriebenen oder vorstehend als bevorzugt beschriebenen Verwendung herstellbar oder hergestellt ist, wobei der Laufstreifen mindestens eine Umfangsrille aufweist und die Standardabweichung des radialen Abstands zwischen der inneren Außenwand des Fahrzeugluftreifens und der Trennfläche

A) zwischen einer Cap- und einer Base-Mischung des vulkanisierten zweiteiligen Laufstreifens,
B) zwischen dem vulkanisierten einteiligen oder zweiteiligen Laufstreifen und dem vulkanisierten Gürtelpaket,
C) zwischen den einzelnen Gürtellagen des vulkanisierten Gürtelpakets,
D) zwischen der vulkanisierten Karkasslage und dem vulkanisierten Gürtelpaket und
E) zwischen der vulkanisierten Karkasslage und dem Innerliner geringer sind als 5 mm, bevorzugt im Bereich von 0,1 bis 2 mm liegen,

wobei

- die zur Ermittlung der besagten Standardabweichung herangezogenen radialen Abstände an mindestens zehn oder mindestens 100 verschiedenen Stellen in dem Fahrzeugluftreifen liegen, wobei die mindestens zehn oder mindestens 100 verschiedenen Stellen an zwei, vier oder acht verschiedenen Querschnitten in dem Fahrzeugluftreifen liegen.

Die vorstehend beschriebene Standardabweichung wird dabei erfindungsgemäß an mindestens zehn Stellen an zwei, vier oder acht verschiedenen Querschnitten eines Reifens ermittelt. Es hat sich gezeigt, dass bereits zehn Stellen an einem einzigen Querschnitt eines Reifens ausreichen (nicht erfindungsgemäß). Dabei wird an dem entsprechenden Querschnitt in der aus Radialschnittansicht gesehenen Laufstreifenmitte mindestens zehn verschiedene Abstände zwischen der inneren Außenwand und einer gewünschten Trennfläche gemessen. Die gemessenen Abstände entsprechen den nachstehend in Formel 1 beschriebenen Messwerten X. Sollten wie beschrieben 10 Abstände ermittelt werden, so entspräche der nachstehend in Formel 1 beschriebenen Parameter N = 10.

Zur Berechnung der Standardabweichung kann beispielsweise die folgende Formel verwendet werden:

$$S = \sqrt{\frac{\sum (X - \bar{X})^2}{N}} \qquad \text{(Formel 1)}$$

wobei

- X der jeweilige Messwert des radialen Abstandes ist,
- $\bar{X}$ der arithmetische Mittelwert der Messwerte des radialen Abstandes ist und
- N die Anzahl der gemessenen Messwerte des radialen Abstandes ist.

Im Rahmen der vorliegenden Erfindung beschreibt der Ausdruck "Trennfläche" zwischen zwei zumindest teilweise aneinander liegenden Schichten den Teil einer Fläche einer der beiden Schichten, an dem die eine Schicht mit der anderen Schicht unmittelbar in Kontakt tritt.

Figurenbeschreibung:

Es zeigt:

Figur 1: Perspektivische Ansicht auf einen schematisch dargestellten Ausschnitt einer erfindungsgemäßen Vorrichtung zum Ausschneiden von zwei Längsrillen in einen unvulkanisierten Kautschukendlosstreifen;

Figur 2: Radialquerschnitt eines schematisch dargestellten Ausschnitts eines Laufstreifens eines erfindungsgemäßen Fahrzeugluftreifens mit vier Umfangsrillen;

Figur 3: Radialquerschnitt eines schematisch dargestellten Ausschnitts eines Laufstreifens eines nicht-erfindungsgemäßen Fahrzeugluftreifens mit zwei Umfangsrillen;

Figur 4: Radialquerschnitt eines schematisch dargestellten Ausschnitts eines Laufstreifens eines nicht-erfindungsgemäßen Fahrzeugluftreifens mit drei Umfangsrillen.

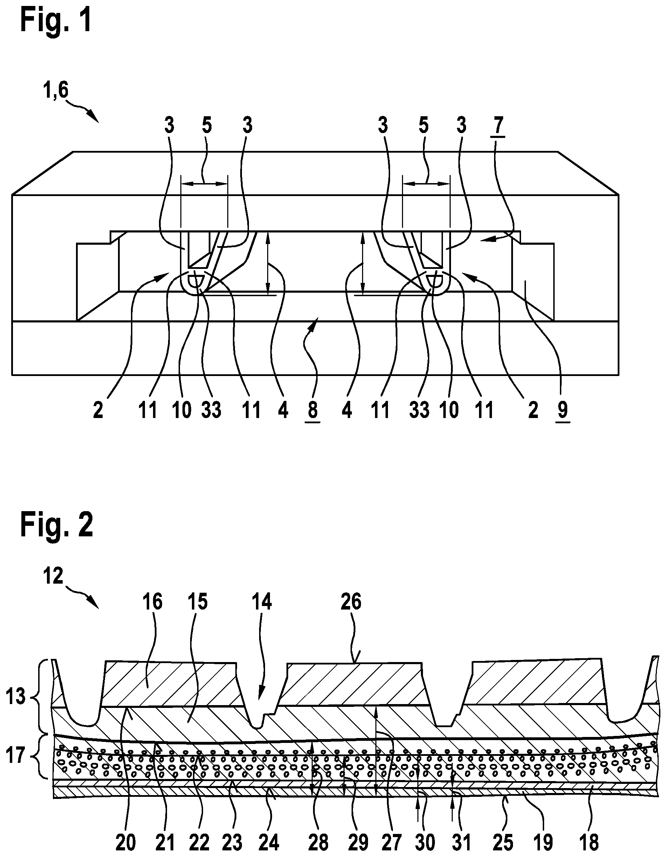

Figur 1 zeigt in einer Ausführungsform eine schematische Darstellung einer erfindungsgemäßer Vorrichtung 1 zum Extrudieren eines unvulkanisierten, Längsrillen aufweisenden Kautschukendlosstreifens zur Herstellung eines Fahrzeugreifenbauteils. Die in Figur 1 dargestellte, erfindungsgemäße Vorrichtung 1 zum Schneiden von zwei Längsrillen in einen unvulkanisierten Kautschukendlosstreifen besteht aus

- einer Ausformeinheit 6 zum Ausformen eines unvulkanisierten Kautschukendlosstreifens mit mindestens einer Strömungseintrittsöffnung 7 und mit mindestens einer Strömungsaustrittsöffnung 8, wobei sich ein Strömungskanal 9 zum Leiten einer unvulkanisierten Kautschukmischung von der einen Strömungseintrittsöffnung 7 zu der einen Strömungsaustrittsöffnung 9 durch die Ausformeinheit 6 erstreckt und
- zwei Schneideeinheiten, die dazu eingerichtet sind, Längsrillen in einen mittels der Ausformeinheit 6 ausgeformten unvulkanisierten Kautschukendlosstreifen zu schneiden, wobei ein Querschnitt der Schneideeinheit 2 eine U-Form aufweist und die Schneideeinheit 2 eine Höhe 4 und eine maximale Breite 5 aufweist.

Die maximale Breite 5 wird an dem Punk der Schneideeinheit 2 gemessen, an der die Schneideeinheit 2 sich in Erstreckungsrichtung der Breite 5 der Schneideeinheit 2 am längsten erstreckt. Das Verhältnis der Höhe 4 und der maximalen Breite 5 in Figur 1 ist 8:5. Die U-förmige Schneideeinheit in Figur 2 wird aus zwei Beinen 3, welche an die Innenwand des Strömungskanals 9 geschweißt ist, und einem die beiden Beine 3 verbindenden Verbindungsstück 33 gebildet. Auch im Falle, dass die Schneideeinheit 2 einen trapezförmigen oder rechteckigen Querschnitt besäße, würde die Schneideeinheit aus zwei Beinen und dem entsprechenden Verbindungsstück 33 aufgebaut sein. Die U-förmige Schneideeinheit 2 in Figur 2 weist zudem eine Mittelflanke 10 mit zwei Ende 11 auf, welche das Verhältnis der Höhe 4 zu der Breite 3 der Schneideeinheit 2 auch unter großen Drücken aufrecht erhält. Die so entstehenden Längsrillen weisen somit auch unter schwierigen Produktionsbedingungen wie einem hohen Druck im Strömungskanal 9 das wichtige Verhältnis der Höhe 4 zu der Breite 3 auf. Zudem ist die Mittelflanke 10 mit den beiden Enden 11 derart an den Beinen 3 der Schneideeinheit 2 entfernbar, insbesondere verschraubbar, angebracht, dass die Mittelflanke 10 eine durch den Strömungskanal 9 fließende Kautschukmischung aus einer planparallel übereinander angeordneten Cap- und einer Base-Mischung in die ihre beiden Mischungsbestandteil, d.h. in die Cap- und die Base-Mischung, trennt. Auf diese Weise können die beiden Mischungsbestandteil einzeln wiederverwendet werden.

Figur 2 zeigt eine schematische Darstellung eines Radialquerschnittes eines Laufstreifenabschnittes eines erfindungsgemäßen Fahrzeugluftreifen 12. Zudem ist der Laufstreifen 13 umfassend die Umfangsrillen 14 und die Base-Mischung 15 und die Cap-Mischung 16 sowie die Lauffläche 26 gezeigt. Der erfindungsgemäße Fahrzeugluftreifen 12 umfasst dabei auch mehrere Gürtellage 17, eine Karkasslage 18, ein Innerliner 19 und dazwischenliegend die Trennflächen 20, 21, 22, 23, 24. Die innere Außenwand 25 des Fahrzeugluftreifens 12 ist die außenliegende Seite des Innerliners 19, von der aus in radiale Richtung die Abstände 27, 28, 21, 30, 31 und der jeweiligen Trennfläche 20, 21, 22, 23, 24 gemessen werden.

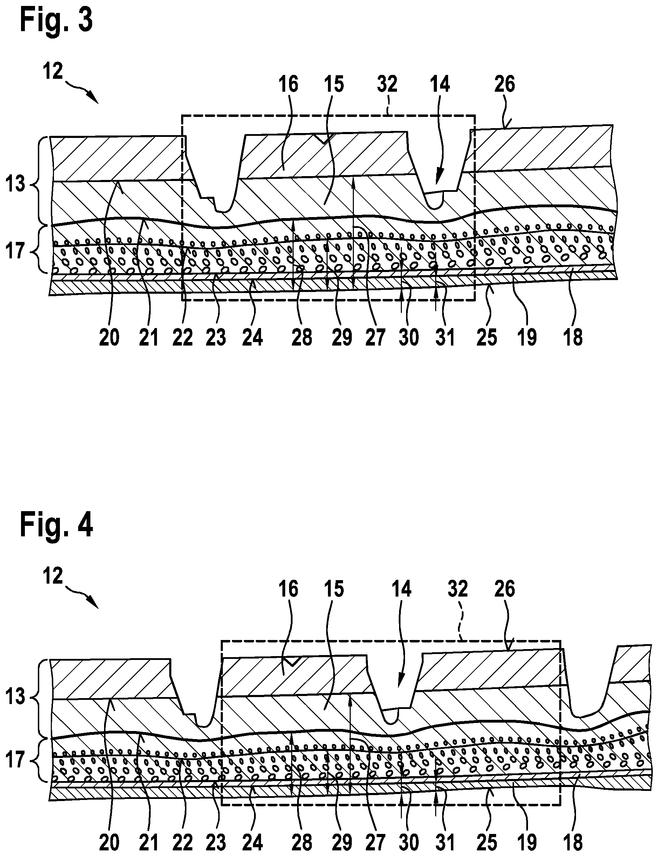

Figur 3 zeigt eine schematische Darstellung eines Radialquerschnittes eines Laufstreifenabschnittes eines nicht-erfindungsgemäßen Fahrzeugluftreifen. Zudem ist der Laufstreifen 13 umfassend die Umfangsrillen 14 und die Base-Mischung 15 und die Cap-Mischung 16 sowie die Lauffläche 26 gezeigt. Der nicht-erfindungsgemäße Fahrzeugluftreifen umfasst dabei auch mehrere Gürtellage 17, eine Karkasslage 18, ein Innerliner 19 und dazwischenliegend die Trennflächen 20, 21, 22, 23, 24. Die innere Außenwand 25 des nicht-erfindungsgemäßen Fahrzeugluftreifens ist die außenliegende Seite des Innerliners 19, von der aus in radiale Richtung die Abstände 27, 28, 21, 30, 31 und der jeweiligen Trennfläche 20, 21, 22, 23, 24 gemessen werden. Auch wurde in Figur 3 die Laufstreifenmitte 32 aus Radialquerschnittansicht gezeigt, wobei in dieser Laufstreifenmitte 32 die entsprechenden Messung zur besagten reduzierten Standardabweichung wie vorstehend beschrieben gemessen werden. Auch bei einem Vergleich der in Figur 3 eingezeichneten Trennlinien zu den Trennfläche 20, 21, 22, 23, 24 mit den entsprechenden Trennlinien in Figur 2 lässt sich eindeutig der Vorteil der vorliegenden Erfindung erkennen.

Figur 4 zeigt eine schematische Darstellung eines Radialquerschnittes eines Laufstreifenabschnittes eines nicht-erfindungsgemäßen Fahrzeugluftreifen. Zudem ist der Laufstreifen 13 umfassend die Umfangsrillen 14 und die Base-Mischung 15 und die Cap-Mischung 16 sowie die Lauffläche 26 gezeigt. Der nicht-erfindungsgemäße Fahrzeugluftreifen umfasst dabei auch mehrere Gürtellage 17, eine Karkasslage 18, ein Innerliner 19 und dazwischenliegend die Trennflächen 20, 21, 22, 23, 24. Die innere Außenwand 25 des nicht-erfindungsgemäßen Fahrzeugluftreifens ist die außenliegende Seite des Innerliners 19, von der aus in radiale Richtung die Abstände 27, 28, 21, 30, 31 und der jeweiligen Trennfläche 20, 21, 22, 23, 24 gemessen werden. Auch wurde in Figur 4 die Laufstreifenmitte 32 aus Radialquerschnittansicht gezeigt, wobei in dieser Laufstreifenmitte 32 die entsprechenden Messung zur besagten reduzierten Standardabweichung wie vorstehend beschrieben gemessen werden. Auch bei einem Vergleich der in Figur 4 eingezeichneten Trennlinien zu den Trennfläche 20, 21, 22, 23, 24 mit den entsprechenden Trennlinien in Figur 2 lässt sich eindeutig der Vorteil der vorliegenden Erfindung erkennen.

Bezugszeichenliste:

1   erfindungsgemäße Vorrichtung zum Schneiden von Längsrillen in einen unvulkanisierten Kautschukendlosstreifen zur Herstellung eines Fahrzeugreifenbauteils;
2   Schneideeinheit mit U-förmigen Querschnitt
3   Bein der Schneideeinheit
4   Höhe der Schneideeinheit
5   maximale Breite der Schneideeinheit
6   Ausformeinheit zum Ausformen eines unvulkanisierten Kautschukendlosstreifens mit mindestens einer Strömungseintrittsöffnung und mit mindestens einer Strömungsaustrittsöffnung; Endschablone einer Extrusionsanlage
7   Strömungseintrittsöffnung der
8   Strömungsaustrittsöffnung
9   Strömungskanal zum Leiten einer unvulkanisierten Kautschukmischung von der einen Strömungseintrittsöffnung zu der einen Strömungsaustrittsöffnung durch die Ausformeinheit

10    Mittelflanke der Schneideeinheit
11    Ende der Mittelflanke
12    Fahrzeugluftreifen
13    Laufstreifen des Fahrzeugluftreifen 12
14    Umfangsrille
15    Base-Mischung des Laufstreifen 13
16    Cap-Mischung des Laufstreifen 13
17    Gürtellagen des Fahrzeugluftreifen 12
18    Karkasslage
19    Innerliner
20    Trennfläche zwischen der Cap- und der Base-Mischung des Laufstreifens 13
21    Trennfläche zwischen Laufstreifen und Gürtelpaket des Fahrzeugluftreifen 12
22    Trennfläche zwischen zwei Gürtellagen des Gürtelpakets des Fahrzeugluftreifen 12
23    Trennfläche zwischen der Karkasslage und dem Gürtelpaket des Fahrzeugluftreifen 12
24    Trennfläche zwischen der Karkasslage und dem Innerliner des Fahrzeugluftreifen 12
25    innere Außenwand des Fahrzeugluftreifen 12
26    Lauffläche des Laufstreifens des Fahrzeugluftreifen 12
27    radialer Abstand zwischen der Außenwand und der Trennfläche 20
28    radialer Abstand zwischen der Außenwand und der Trennfläche 21
29    radialer Abstand zwischen der Außenwand und der Trennfläche 22
30    radialer Abstand zwischen der Außenwand und der Trennfläche 23
31    radialer Abstand zwischen der Außenwand und der Trennfläche 24
32    aus Radialquerschnitt gesehenene Laufstreifenmitte
33    das die beiden Beine 3 verbindende Verbindungsstück einer Schneideeinheit 2
34    Komponentenanordnungseinheit
35    Extruderschnecke
36    Strömungsleitrichtung des Strömungskanal 9

**Patentansprüche**

1.  Vorrichtung (1) zum Extrudieren eines unvulkanisierten, Längsrillen aufweisenden Kautschukendlosstreifen zur Herstellung eines Fahrzeugreifenbauteils (13, 14, 15), umfassend oder bestehend aus

    - eine Ausformeinheit (6) zum Ausformen eines unvulkanisierten Kautschukendlosstreifens mit mindestens einer Strömungseintrittsöffnung (7) und mit mindestens einer Strömungsaustrittsöffnung (8), wobei sich ein Strömungskanal (9) zum Leiten einer unvulkanisierten Kautschmischung von der einen Strömungseintrittsöffnung (7) zu der einen Strömungsaustrittsöffnung (8) durch die Ausformeinheit (6) erstreckt,
    - Komponentenanordnungseinheit (34) zum Zuführen von einer oder mehrerer unvulkanisierten Kautschukkomponenten in die Ausformeinheit (6), wobei die Komponentenanordnungseinheit (34) einen oder mehrere Strömungskanäle aufweist,
    - mindestens eine Schneideeinheit (2), die dazu eingerichtet ist, Längsrillen in einen durch die Ausformeinheit (6) ausgeformten unvulkanisierten Kautschukendlosstreifen zu schneiden, wobei ein zur Strömungsleitrichtung (36) des Strömungskanal (9) senkrecht verlaufende Querschnitt der Schneideeinheit (2) eine U-Form, eine rechteckige Form oder eine Trapezform aufweist und die Schneideeinheit (2) eine Höhe (4) und eine maximale Breite (5) aufweist,

    **dadurch gekennzeichnet, dass**
    die Schneideeinheit (2) einteilig ausgebildet ist, wobei die mindestens eine Schneideeinheit (2) mit U-förmigen Querschnitt zwei Beine (3) aufweist und zusätzlich eine Mittelplanke (10) mit oder ohne Schneide aufweist, wobei die Mittelplanke (10) sich von einem Bein (3) der Schneideeinheit (2) zum anderen Bein (3) der Schneideeinheit (2) erstreckt.

2.  Vorrichtung (1) nach Anspruch 1, wobei das Verhältnis zwischen der Höhe (4) der Schneideeinheit (2) zu der maximalen Breite (5) der Schneideeinheit (2) im Bereich von 20:1 bis 1:3, 10:1 bis 1:2 liegt, bevorzugt im Bereich von 6:1 bis 1:1, besonders bevorzugt im Bereich von 2:1 bis 1,5:1.

3.  Vorrichtung (1) nach einem der vorangehenden Ansprüche, wobei

- die Höhe (4) der Schneideeinheit (2) im Bereich von 10 % bis 99 % der Höhe der Strömungsaustrittsöffnung (8) liegt
und/oder
- die Breite der Schneideeinheit (2) im Bereich von 0,1 mm bis 15 mm liegt.

4. Vorrichtung (1) nach einem der vorangehenden Ansprüche, wobei das eine Ende (11) der Mittelplanke (10) an einem Bein (3) der Schneideeinheit (2) und das andere Ende (11) der Mittelplanke (10) an dem anderen Bein (3) der Schneideeinheit (2) angeordnet ist oder höhenverstellbar angebracht ist, wobei die beiden Beine (3) bevorzugt jeweils an einem Ende mit ein und demselben Verbindungsstück (33) miteinander stoffschlüssig verbunden sind und das jeweils andere Ende eines Beines (3) der Schneideeinheit (2) an der einen Strömungswand oder an dem Rahmen der Ausformeinheit (6).

5. Vorrichtung (1) nach einem der vorangehenden Ansprüche, wobei das jeweilige besagte andere Ende der zwei Beine (3) einer jeden Schneideeinheit (2) mit U-förmigen Querschnitt an einer Strömungswand des eine Strömungskanals (9) oder an einem in Strömungsleitrichtung (36) des Strömungskanal (9) gesehen hinter der Strömungsaustrittsöffnung (8) der Ausformeinheit (6) angeordneten Rahmen angebracht ist, wobei das jeweilige besagte andere Ende der zwei Beine (3) einer jeden Schneideeinheit (2) mit U-förmigen Querschnitt bevorzugt an der einen Strömungswand oder an dem Rahmen angeschraubt ist.

6. Vorrichtung (1) nach einem der vorangehenden Ansprüche, wobei die Schneideeinheit (2) in Strömungsleitrichtung (36) des Strömungskanal (9) gesehen hinter der Strömungsaustrittsöffnung (8) der Ausformeinheit (6)angeordnet und angebracht ist und bevorzugt höchstens einen Abstand zur Strömungsaustrittsöffnung (8) von 100 mm, bevorzugt 1 mm, aufweist.

7. Vorrichtung (1) nach einem der vorangehenden Ansprüche, wobei die Vorrichtung (1) einen Extruder mit einer Extruderschnecke (35) pro Strömungskanal (9) der Komponentenanordnungseinheit (34) aufweist und die jeweilige Extruderschnecke (35) dazu eingerichtet ist, eine unvulkanisierte Kautschukkomponente in den jeweiligen Strömungskanal (9) der Komponentenanordnungseinheit (34) zu drücken.

8. Vorrichtung (1) nach einem der vorangehenden Ansprüche, wobei die Vorrichtung (1) zusätzlich eine Querschneideeinheit umfasst, wobei die Querschneideeinheit dazu vorgesehen ist, einen oder sämtliche von aus einer Kautschukmischung bestehenden und mittels der Vorrichtung (1) hergestellten Streifen in unvulkanisierten Fahrzeugreifenbauteilen (13, 14, 15) zu schneiden.

9. Verwendung einer Vorrichtung (1) nach einem der vorangehenden Ansprüche

- zum Herstellen eines Fahrzeugluftreifens (12), insbesondere eines Fahrzeugluftreifens nach Anspruch 12, und/oder
- zum Extrudieren eines unvulkanisierten Kautschukendlosstreifen zur Herstellung eines Fahrzeugreifenbauteils (13, 14, 15) mit Längsrillen, wobei die Vorrichtung (1) bevorzugt dazu verwendet wird, Längsrillen in einen unvulkanisierten Kautschukendlosstreifen zur Herstellung eines Laufstreifens (13) eines Fahrzeugluftreifens (12) zu schneiden, wobei der Kautschukendlosstreifen besonders bevorzugt mindestens zwei Kautschukmischungen umfasst, wobei die eine der mindestens zwei Kautschukmischungen eine Cap-Mischung (16) ist und die zweite der mindestens zwei Kautschukmischungen eine Base-Mischung (15) ist, wobei ganz besonders bevorzugt die Cap- und die Base-Mischung (16, 15) in dem Kautschukendlosstreifen planparallel übereinander angeordnet sind und die Schneideeinheit einen Teil der Cap-Mischung (16) und einen Teil der Base-Mischung (15) aus dem Kautschukendlosstreifen herausschneidet, wobei insbesondere ganz besonders bevorzugt die Mittelflanke (10) der Schneideeinheit den Teil der Cap-Mischung (16) von dem Teil der Base-Mischung (15) trennt.

10. Verfahren zum Herstellen eines Fahrzeugluftreifens (12), umfassend die folgenden Schritte:

A) Extrudieren und/oder Walzen mindestens einer unvulkanisierten Kautschukmischung,
B) Ausformen und Schneiden der einen extrudierten und/oder gewalzenen unvulkanisierten Kautschukmischung zu einen unvulkanisierten Kautschukendlosstreifen und Ausschneiden von Längsrillen in den unvulkanisierten Kautschukendlosstreifen mittels einer Vorrichtung (1) nach einem der Ansprüche 1 bis 8, sodass ein unvulkanisierter Kautschukendlosstreifen mit Längsrillen, wobei die extrudierte und/oder gewalzene unvulkanisierte Kautschukmischung während des Schneidens bevorzugt noch mindestens eine Temperatur von 90 °C hat,

C) Optionales Ausformen von weiterer Kautschukmischung der mindestens einen unvulkanisierten Kautschukmischung zu weiteren Kautschukendlosstreifen,

D) Zuschneiden des unvulkanisierten Kautschukendlosstreifens mit Längsrillen zu einem unvulkanisierten Laufstreifenbauteil zur Herstellung eines Laufstreifens (13) eines Fahrzeugluftreifens (12) und optionales Zuschneiden der weiteren Kautschukendlosstreifen zu weiteren unvulkanisierten Bauteilen zur Herstellung eines Fahrzeugluftreifens (12),

E) Verarbeiten

- des in Schritt D) resultierenden unvulkanisierten Laufstreifenbauteils und optional
- weiterer und/oder der weiteren unvulkanisierten Bauteile zur Herstellung eines Fahrzeugluftreifens (12)

zu einem unvulkanisierten Reifenrohling zur Herstellung eines Fahrzeugluftreifens (12), wobei das Laufstreifenbauteil bevorzugt aus den Längsrillen des unvulkanisierten Kautschukendlosstreifens resultierende Umfangsrillen (14) umfasst,

F) Vulkanisieren des in Schritt E) angefertigten Reifenrohlings, sodass ein Fahrzeugluftreifen (12) mit einem Laufstreifen (13) mit Umfangsrillen (14) entsteht.

11. Verfahren nach Anspruch 10, wobei der in Schritt B) entstehende unvulkanisierte Kautschukendlosstreifen mit Längsrillen eine Base-Mischung (15) und eine Cap-Mischung (16) umfasst, wobei die Base-Mischung (15) und die Cap-Mischung (16) planparallel übereinander angeordnet sind und die Schneideeinheit beim Ausschneiden in Schritt B) einen Teil der Cap-Mischung (16) und einen Teil der Base-Mischung (15) aus dem Kautschukendlosstreifen herausschneidet, wobei bevorzugt die Mittelflanke der Schneideeinheit den Teil der Cap-Mischung (16) von dem Teil der Base-Mischung (15) trennt.

12. Fahrzeugluftreifen umfassend eine innere Außenwand (25) sowie einen einteiligen oder zweiteiligen Laufstreifen (13), wobei der Laufstreifen (13) nach ein Verfahren nach einem der Ansprüche 10 bis 11 oder gemäß der Verwendung nach Anspruch 9 herstellbar oder hergestellt ist, wobei der Laufstreifen (13)mindestens eine Umfangsrille (14) aufweist und die Standardabweichung des radialen Abstands (27, 28, 29, 30, 31) zwischen der inneren Außenwand (25) des Fahrzeugluftreifens (12) und der Trennfläche (20, 21, 22, 23, 24)

A) zwischen einer Cap- und einer Base-Mischung (15, 16) des vulkanisierten zweiteiligen Laufstreifens (12),
B) zwischen dem vulkanisierten einteiligen oder zweiteiligen Laufstreifen (12) und dem vulkanisierten Gürtelpaket,
C) zwischen den einzelnen Gürtellagen (17) des vulkanisierten Gürtelpakets,
D) zwischen der vulkanisierten Karkasslage (18) und dem vulkanisierten Gürtelpaket
und
E) zwischen der vulkanisierten Karkasslage (18) und dem Innerliner (19) geringer sind als 5 mm, bevorzugt im Bereich von 0,1 bis 2 mm liegen,

wobei

- die zur Ermittlung der besagten Standardabweichung herangezogenen radialen Abstände (27, 28, 29, 30, 31) an mindestens zehn oder mindestens 100 verschiedenen Stellen in dem Fahrzeugluftreifen (12) liegen, wobei die mindestens zehn oder mindestens 100 verschiedenen Stellen an zwei, vier oder acht verschiedenen Querschnitten in dem Fahrzeugluftreifen (12) liegen.

## Claims

1. Apparatus (1) for extruding an endless unvulcanized rubber strip having longitudinal grooves for producing a vehicle tyre component (13, 14, 15), comprising or consisting of

- a forming unit (6) for forming an endless unvulcanized rubber strip, with at least one flow inlet opening (7) and with at least one flow outlet opening (8), wherein a flow channel (9) for directing an unvulcanized rubber compound extends through the forming unit (6) from the one flow inlet opening (7) to the one flow outlet opening (8),
- a component arrangement unit (34) for feeding one or more unvulcanized rubber components into the forming unit (6), wherein the component arrangement unit (34) has one or more flow channels,
- at least one cutting unit (2), which is designed to cut longitudinal grooves into an endless unvulcanized rubber strip which is formed by the forming unit (6), wherein a cross section of the cutting unit (2) extending perpendicularly to the flow-directing direction (36) of the flow channel (9) has a U shape, a rectangular shape or a trapezoidal shape and the cutting unit (2) has a height (4) and a maximum width (5),

**characterized in that**
the cutting unit (2) is formed as one part, wherein the at least one cutting unit (2) with a U-shaped cross section has two legs (3) and in addition a middle strip (10) with or without a cutting edge, wherein the middle strip (10) extends from one leg (3) of the cutting unit (2) to the other leg (3) of the cutting unit (2).

2. Apparatus (1) according to Claim 1, wherein the ratio between the height (4) of the cutting unit (2) and the maximum width (5) of the cutting unit (2) lies in the range from 20:1 to 1:3, 10:1 to 1:2, preferably in the range from 6:1 to 1:1, particularly preferably in the range from 2:1 to 1.5:1.

3. Apparatus (1) according to one of the preceding claims, wherein

   - the height (4) of the cutting unit (2) lies in the range from 10% to 99% of the height of the flow outlet opening (8) and/or
   - the width of the cutting unit (2) lies in the range from 0.1 mm to 15 mm.

4. Apparatus (1) according to one of the preceding claims, wherein the one end (11) of the middle strip (10) is arranged on or height-adjustably attached to one leg (3) of the cutting unit (2) and the other end (11) of the middle strip (10) is arranged on or height-adjustably attached to the other leg (3) of the cutting unit (2), wherein the two legs (3) are preferably integrally connected to one another at one end by one and the same connecting piece (33) and the other end respectively of a leg (3) of the cutting unit (2) is attached to the one flow wall or to the frame of the forming unit (6).

5. Apparatus (1) according to one of the preceding claims, wherein the respective said other end of the two legs (3) of each cutting unit (2) with a U-shaped cross section is attached to a flow wall of the one flow channel (9) or to a frame arranged downstream of the flow outlet opening (8) of the forming unit (6), as seen in the flow-directing direction (36) of the flow channel (9), wherein the respective said other end of the two legs (3) of each cutting unit (2) with a U-shaped cross section is preferably screwed to the one flow wall or to the frame.

6. Apparatus (1) according to one of the preceding claims, wherein the cutting unit (2) is arranged and attached downstream of the flow outlet opening (8) of the forming unit (6), as seen in the flow-directing direction (36) of the flow channel (9), and preferably has at most a distance from the flow outlet opening (8) of 100 mm, preferably 1 mm.

7. Apparatus (1) according to one of the preceding claims, wherein the apparatus (1) has an extruder with an extruder screw (35) for each flow channel (9) of the component arrangement unit (34) and the respective extruder screw (35) is designed to force an unvulcanized rubber component into the respective flow channel (9) of the component arrangement unit (34).

8. Apparatus (1) according to one of the preceding claims, wherein the apparatus (1) additionally comprises a cross-cutting unit, wherein the cross-cutting unit is intended to cut one or all of the strips consisting of a rubber compound and produced by means of the apparatus (1) into unvulcanized vehicle tyre components (13, 14, 15).

9. Use of an apparatus (1) according to one of the preceding claims

   - for producing a pneumatic vehicle tyre (12), in particular a pneumatic vehicle tyre according to Claim 12, and/or
   - for extruding an endless unvulcanized rubber strip for producing a vehicle tyre component (13, 14, 15) with longitudinal grooves, wherein the apparatus (1) is preferably used to cut longitudinal grooves into an endless unvulcanized rubber strip for producing a tread (13) of a pneumatic vehicle tyre (12), wherein the endless rubber strip particularly preferably comprises at least two rubber compounds, wherein the one of the at least two rubber compounds is a cap compound (16) and the second of the at least two rubber compounds is a base compound (15), wherein most particularly preferably the cap compound (16) and the base compound (15) are arranged in the endless rubber strip plane-parallel one above the other and the cutting unit cuts out a part of the cap compound (16) and a part of the base compound (15) from the endless rubber strip, wherein in particular most particularly preferably the middle strip (10) of the cutting unit separates the part of the cap compound (16) from the part of the base compound (15).

**10.** Process for producing a pneumatic vehicle tyre (12), comprising the following steps:

A) extruding and/or rolling at least one unvulcanized rubber compound,

B) forming and cutting the one extruded and/or rolled unvulcanized rubber compound into an endless unvulcanized rubber strip and cutting out longitudinal grooves in the endless unvulcanized rubber strip by means of an apparatus (1) according to one of Claims 1 to 8, to give an endless unvulcanized rubber strip with longitudinal grooves, wherein the extruded and/or rolled unvulcanized rubber compound preferably still has at least a temperature of 90°C during the cutting,

C) optionally forming further rubber compound from the at least one unvulcanized rubber compound into further endless rubber strips,

D) cutting the endless unvulcanized rubber strip with longitudinal grooves into an unvulcanized tread component for producing a tread (13) of a pneumatic vehicle tyre (12) and optionally cutting the further endless rubber strip into further unvulcanized components for producing a pneumatic vehicle tyre (12),

E) processing

- the unvulcanized tread component obtained as a result in step D) and optionally
- further and/or the further unvulcanized components for producing a pneumatic vehicle tyre (12)

into an unvulcanized green tyre for producing a pneumatic vehicle tyre (12), wherein the tread component preferably comprises circumferential grooves (14) resulting from the longitudinal grooves of the endless unvulcanized rubber strip,

F) vulcanizing the green tyre prepared in step E), so that a pneumatic vehicle tyre (12) having a tread (13) with circumferential grooves (14) is created.

**11.** Process according to Claim 10, wherein the endless unvulcanized rubber strip with longitudinal grooves created in step B) comprises a base compound (15) and a cap compound (16), wherein the base compound (15) and the cap compound (16) are arranged plane-parallel one above the other and the cutting unit cuts out a part of the cap compound (16) and a part of the base compound (15) from the endless rubber strip during the cutting out in step B), wherein preferably the middle strip of the cutting unit separates the part of the cap compound (16) from the part of the base compound (15).

**12.** Pneumatic vehicle tyre comprising an inner outer wall (25) and a one-part or two-part tread (13), wherein the tread (13) can be produced or is produced by a process according to either of Claims 10 and 11 or as described by the use according to Claim 9, wherein the tread (13) has at least one circumferential groove (14) and the standard deviation of the radial distance (27, 28, 29, 30, 31) between the inner outer wall (25) of the pneumatic vehicle tyre (12) and the separating surface (20, 21, 22, 23, 24)

A) between a cap compound (16) and a base compound (15) of the vulcanized two-part tread (12),

B) between the vulcanized one-part or two-part tread (12) and the vulcanized belt assembly,

C) between the individual belt plies (17) of the vulcanized belt assembly,

D) between the vulcanized carcass ply (18) and the vulcanized belt assembly and

E) between the vulcanized carcass ply (18) and the inner liner (19) is less than 5 mm, preferably lies in the range from 0.1 to 2 mm,

wherein

- the radial distances (27, 28, 29, 30, 31) used for determining the said standard deviation lie at at least ten or at least 100 different points in the pneumatic vehicle tyre (12), wherein the at least ten or at least 100 different points lie at two, four or eight different cross sections in the pneumatic vehicle tyre (12).

**Revendications**

**1.** Dispositif (1) d'extrusion d'une bande sans fin en caoutchouc non vulcanisée comportant des rainures longitudinales pour la fabrication d'un composant (13, 14, 15) de pneu de véhicule, comprenant ou constitué de

- une unité de formage (6) destinée à former une bande sans fin en caoutchouc non vulcanisée avec au moins une ouverture d'entrée d'écoulement (7) et avec au moins une ouverture de sortie d'écoulement (8), un canal d'écoulement (9) destiné à guider un mélange de caoutchoucs non vulcanisé s'étendant à travers l'unité de formage (6) depuis l'ouverture d'entrée d'écoulement (7) vers l'ouverture de sortie d'écoulement (8),

- une unité d'agencement de composants (34) destinée à amener un ou plusieurs composants en caoutchouc non vulcanisés dans l'unité de formage (6), l'unité d'agencement de composants (34) comportant un ou plusieurs canaux d'écoulement,

- au moins une unité de découpe (2), qui est mise au point pour découper des rainures longitudinales dans une bande sans fin en caoutchouc non vulcanisée formée par l'unité de formage (6), une section transversale de l'unité de découpe (2) s'étendant perpendiculairement à la direction de guidage d'écoulement (36) du canal d'écoulement (9) présentant une forme en U, une forme rectangulaire ou une forme trapézoïdale et l'unité de découpe (2) présentant une hauteur (4) et une largeur (5) maximale,

**caractérisé en ce que**
l'unité de découpe (2) est réalisée en une partie, l'au moins une unité de découpe (2) avec une section transversale en forme de U comportant deux jambes (3) et comportant en supplément une planche centrale (10) avec ou sans tranchant, la planche centrale (10) s'étendant depuis une jambe (3) de l'unité de découpe (2) vers l'autre jambe (3) de l'unité de découpe (2).

2. Dispositif (1) selon la revendication 1, le rapport entre la hauteur (4) de l'unité de découpe (2) et la largeur (5) maximale de l'unité de découpe (2) se situant dans la plage de 20:1 à 1:3, de 10:1 à 1:2, de manière préférée dans la plage de 6:1 à 1:1, de manière particulièrement préférée dans la plage de 2:1 à 1,5:1.

3. Dispositif (1) selon l'une quelconque des revendications précédentes,

   - la hauteur (4) de l'unité de découpe (2) se situant dans la plage de 10 % à 99 % de la hauteur de l'ouverture de sortie d'écoulement (8)
   et/ou
   - la largeur de l'unité de découpe (2) se situant dans la plage de 0,1 mm à 15 mm.

4. Dispositif (1) selon l'une des revendications précédentes, une extrémité (11) de la planche centrale (10) étant disposée sur une jambe (3) de l'unité de découpe (2) et l'autre extrémité (11) de la planche centrale (10) étant disposée sur l'autre jambe (3) de l'unité de découpe (2) ou étant installée de manière ajustable en hauteur, les deux jambes (3) étant reliées de manière préférée chacune l'une à l'autre par liaison de matière par une seule et même pièce de liaison (33) sur une extrémité et l'autre extrémité respectivement d'une jambe (3) de l'unité de découpe (2) étant reliée à une paroi d'écoulement ou au cadre de l'unité de formage (6).

5. Dispositif (1) selon l'une des revendications précédentes, ladite autre extrémité respective des deux jambes (3) de chaque unité de découpe (2) avec une section transversale en forme de U étant installée sur une paroi d'écoulement d'un canal d'écoulement (9) ou sur un cadre disposé, vu dans la direction de guidage d'écoulement (36) du canal d'écoulement (9), derrière l'ouverture de sortie d'écoulement (8) de l'unité de formage (6), ladite autre extrémité respective des deux jambes (3) de chaque unité de découpe (2) avec une section transversale en forme de U étant vissée de manière préférée sur une paroi d'écoulement ou sur le cadre.

6. Dispositif (1) selon l'une des revendications précédentes, l'unité de découpe (2) étant disposée et installée vue dans la direction de guidage d'écoulement (36) du canal d'écoulement (9) derrière l'ouverture de sortie d'écoulement (8) de l'unité de formage (6) et présentant de manière préférée au maximum une distance par rapport à l'ouverture de sortie d'écoulement (8) de 100 mm, de préférée de 1 mm.

7. Dispositif (1) selon l'une des revendications précédentes, le dispositif (1) comportant une extrudeuse avec une vis sans fin (35) d'extrudeuse par canal d'écoulement (9) de l'unité d'agencement de composants (34) et la vis sans fin (35) d'extrudeuse respective étant mise au point pour pousser un composant en caoutchouc non vulcanisé dans le canal d'écoulement (9) respectif de l'unité d'agencement de composants (34).

8. Dispositif (1) selon l'une des revendications précédentes, le dispositif (1) comprenant en supplément une unité de découpe transversale, l'unité de découpe transversale étant prévue pour découper une bande ou toutes les bandes constituées d'un mélange de caoutchoucs et fabriquées au moyen du dispositif (1) en composants (13, 14, 15) de pneu de véhicule non vulcanisés.

9. Utilisation d'un dispositif (1) selon l'une des revendications précédentes,

- pour fabriquer un pneumatique (12) de véhicule, en particulier un pneumatique de véhicule selon la revendication 12,
et/ou
- pour extruder une bande sans fin en caoutchouc non vulcanisée pour la fabrication d'un composant (13, 14, 15) de pneu de véhicule avec des rainures longitudinales, le dispositif (1) étant utilisé de manière préférée pour découper des rainures longitudinales dans une bande sans fin en caoutchouc non vulcanisée pour la fabrication d'une bande de roulement (13) d'un pneumatique (12) de véhicule, la bande sans fin en caoutchouc comprenant de manière particulièrement préférée au moins deux mélanges de caoutchoucs, l'un des au moins deux mélanges de caoutchoucs étant un mélange CAP (16) et le deuxième des au moins deux mélanges de caoutchoucs étant un mélange BASE (15), le mélange CAP et le mélange BASE (16, 15) étant de manière très particulièrement préférée disposés l'un au-dessus de l'autre de manière plane et parallèle dans la bande sans fin en caoutchouc et l'unité de découpe découpant une partie du mélange CAP (16) et une partie du mélange BASE (15) de la bande sans fin en caoutchouc, le flanc central (10) de l'unité de découpe séparant en particulier de manière très particulièrement préférée la partie du mélange CAP (16) de la partie du mélange BASE (15).

10. Procédé de fabrication d'un pneumatique (12) de véhicule, comprenant les étapes suivantes :

A) extrusion et/ou laminage d'au moins un mélange de caoutchoucs non vulcanisé,
B) formage et découpage d'un mélange de caoutchoucs non vulcanisé extrudé et/ou laminé en une bande sans fin en caoutchouc non vulcanisée et découpage de rainures longitudinales dans la bande sans fin en caoutchouc non vulcanisée au moyen d'un dispositif (1) selon l'une des revendications 1 à 8 de manière à former une bande sans fin en caoutchouc non vulcanisée avec des rainures longitudinales, le mélange de caoutchoucs non vulcanisé extrudé et/ou laminé présentant de manière préférée encore au moins une température de 90 °C pendant le découpage,
C) formage en option d'autres mélanges de caoutchoucs de l'au moins un mélange de caoutchoucs non vulcanisé en d'autres bandes sans fin en caoutchouc,
D) découpage de la bande sans fin en caoutchouc non vulcanisée avec des rainures longitudinales en un composant de bande de roulement non vulcanisé pour la fabrication d'une bande de roulement (13) d'un pneumatique (12) de véhicule et découpage en option des autres bandes sans fin en caoutchouc en d'autres composants non vulcanisés pour la fabrication d'un pneumatique (12) de véhicule,
E) traitement

   - du composant de bande de roulement non vulcanisé résultant de l'étape D) et en option
   - d'autres composants et/ou des autres composants non vulcanisés pour la fabrication d'un pneumatique (12) de véhicule,

en une ébauche de pneu non vulcanisée pour la fabrication d'un pneumatique (12) de véhicule, le composant de bande de roulement comprenant des rainures périphériques (14) résultant des rainures longitudinales de la bande sans fin en caoutchouc non vulcanisée,
F) vulcanisation de l'ébauche de pneu produite lors de l'étape E) de manière à produire un pneumatique (12) de véhicule avec une bande de roulement (13) avec des rainures périphériques (14).

11. Procédé selon la revendication 10, la bande sans fin en caoutchouc non vulcanisée produite dans l'étape B) avec des rainures longitudinales comprenant un mélange BASE (15) et un mélange CAP (16), le mélange BASE (15) et le mélange CAP (16) étant disposés l'un au-dessus de l'autre de manière plane et parallèle et l'unité de découpe découpant de la bande sans fin en caoutchouc une partie du mélange CAP (16) et une partie du mélange BASE (15) lors de la découpe dans l'étape B), le flanc central de l'unité de découpe séparant de manière préférée la partie du mélange CAP (16) de la partie du mélange BASE (15).

12. Pneumatique de véhicule comprenant une paroi extérieure intérieure (25) ainsi qu'une bande de roulement (13) en une partie ou en deux parties, la bande de roulement (13) pouvant être fabriquée ou étant fabriquée selon un procédé selon l'une des revendications 10 à 11 ou selon l'utilisation selon la revendication 9, le pneumatique (13) comportant au moins une rainure périphérique (14) et l'écart standard de la distance radiale (27, 28, 29, 30, 31) entre la paroi extérieure intérieure (25) du pneumatique (12) de véhicule et la surface de séparation (20, 21, 22, 23, 24)

A) entre un mélange CAP et un mélange BASE (15, 16) de la bande de roulement (12) en deux parties vulcanisée,
B) entre la bande de roulement (12) vulcanisée en une partie ou en deux parties et la ceinture vulcanisée,
C) entre les diverses nappes de ceinture (17) de la ceinture vulcanisée,

D) entre la nappe de carcasse (18) vulcanisée et la ceinture vulcanisée
et
E) entre la nappe de carcasse (18) vulcanisée et le revêtement intérieur (19) étant inférieur à 5 mm, se situant de manière préférée dans la plage de 0,1 à 2 mm,
- les distances radiales (27, 28, 29, 30, 31) prises en compte pour déterminer ledit écart standard se trouvant dans le pneumatique (12) de véhicule sur au moins dix ou au moins 100 différents emplacements, les au moins dix ou les au moins 100 différents emplacements se trouvant sur deux, quatre ou huit sections transversales différentes dans le pneumatique (12) de véhicule.

# Fig. 1

# Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3118023 B1
- DE 3502020 A1
- DE 102015108707 A1
- JP 2005014403 A
- EP 0925903 A1
- EP 2174770 A2

- US 2012012236 A1
- US 3814160 A
- US 2560022 A
- US 4773459 A
- EP 1097825 A2